# EUROPÄISCHE PATENTSCHRIFT

(11) **EP 4 634 544 B1**
(45) Veröffentlichungstag und Bekanntmachung des Hinweises auf die Patenterteilung: **11.11.2026**
(21) Anmeldenummer: 23810014.3
(22) Anmeldetag: 20.11.2023
(51) Int. Cl.: F16D 48/06

(54) **SYSTEM UND VERFAHREN ZUM BETREIBEN EINER ARBEITSMASCHINE**
SYSTEM AND METHOD FOR OPERATING A WORK MACHINE
SYSTÈME ET PROCÉDÉ D'EXPLOITATION D'UNE MACHINE DE TRAVAIL

(30) Priorität: 16.12.2022 DE 102022213793
(43) Veröffentlichungstag der Anmeldung: 22.10.2025
(73) Patentinhaber: ZF Friedrichshafen AG, 88046 Friedrichshafen (DE)
(72) Erfinder: BIEBER, Sven, 88677 Markdorf (DE); DIETERICH, Tobias, 88048 Friedrichshafen (DE)
(74) Vertreter: ZF Friedrichshafen AG
(86) Internationale Anmeldenummer: PCT/EP2023/082322
(87) Internationale Veröffentlichungsnummer: WO 2024/125957

(56) Entgegenhaltungen:
- US-A1- 2015 133 267
- US-A1- 2017 015 294
- US-B2- 10 948 079

## Beschreibung

Die Erfindung betrifft Verfahren sowie ein System zum Betreiben einer Arbeitsmaschine. Beansprucht werden in diesem Zusammenhang insbesondere eine Prozessoreinheit, ein Antriebsstrang, eine Arbeitsmaschine und ein Computerprogrammprodukt.

Moderne Kraftfahrzeuge in Form von Arbeitsmaschinen können durch Dieselmotoren angetrieben werden und verfügen typischerweise über lastschaltbare Stufengetriebe in Kombination mit einem hydrodynamischen Drehmomentwandler. Diese Drehmomentwandler sind mit einer oder mehreren als sogenannte Richtungskupplung wirkenden Lastschaltkupplung/en ausgestattet. Mit einer solchen Lastschaltkupplung ist es möglich, einen sogenannten Inchbetrieb auszuführen. Die (Haupt-)Richtungskupplungen sind so ausgelegt, dass sie zum einen zum Anfahren (Gangeinlagen) verwendet werden können, als auch zum Inchbetrieb (thermische Auslegung, Lamellenanzahl etc.).

Als "Inchen" ist ein Steuervorgang in eine Arbeitsmaschine mit einem hydraulischen Antriebssystem zu verstehen, wobei das System einen bestimmten (mechanischen oder elektronischen) Zusammenhang zwischen der Brems- oder Inch-Pedalstellung und der Fahrgeschwindigkeit realisiert, der erforderlich wird, wenn die eine Bewegung (z. B. die Fahrgeschwindigkeit) kleiner sein soll als es der Motordrehzahl entspricht, wobei eine bestimmte Motordrehzahl jedoch für eine zweite Bewegung, insbesondere von Anbaugeräten oder dergleichen wie z. B. Gabeln bei Gabelstaplern oder Schaufeln bei Radladern, benötigt wird. Dieser Steuervorgang wird als Inchen bezeichnet. Beim Inchen ist die Zugkraft des Fahrantriebs über ein entsprechendes Pedal von 100 % bis auf 0 % beliebig veränderbar.

Ist die Anforderung, dass an Stelle am Fahrantrieb eine hohe Antriebsleistung an der Arbeitshydraulik benötigt wird, ist es möglich, den Fahrantrieb abzukoppeln. Dazu sind im Stufengetriebe lastschaltbaren Kupplungen entweder eine Kupplung komplett geöffnet werden oder die übertragene Leistung wird durch eine rutschende Kupplung eingestellt. Der Einsatz einer rutschenden Kupplung für eine Zugkraftmodulierung mit einer begrenzten Leistungsaufnahme wird "Inchen" genannt.

Beim "Inchen" wird eine lastschaltfähige Lamellenkupplung im rutschenden Zustand betrieben, wobei ein Drehmoment von größer / gleich 0 Nm übertragen wird. Eine rutschende Kupplung erwärmt jedoch während des Betriebs relativ stark, weshalb der Bereich, in dem ein Rutschen der Kupplung dauerhaft möglich ist, begrenzt ist. Um die Grenzwerte der Kupplungskapazitäten einzuhalten und Kupplungsschäden zu vermeiden, ist es erforderlich, dass der vorgegebene hydraulische Druck und der daraus resultierende tatsächliche Druck im Wesentlichen übereinstimmen. Um dies zu gewährleisten, kommt bisher ein relativ hohes Maß an Messtechnik zum Einsatz, die eine möglichst genaue Übereinstimmung von Soll- und Ist-Druck an der Kupplung sicherstellt. Trotz durch Messtechnik eingestellte Fahrzeuge ist die Genauigkeit im Betrieb der Arbeitsmaschine nicht gut genug, weshalb es zu Kupplungsausfällen durch zu hohen Inch-Druck kommen kann.

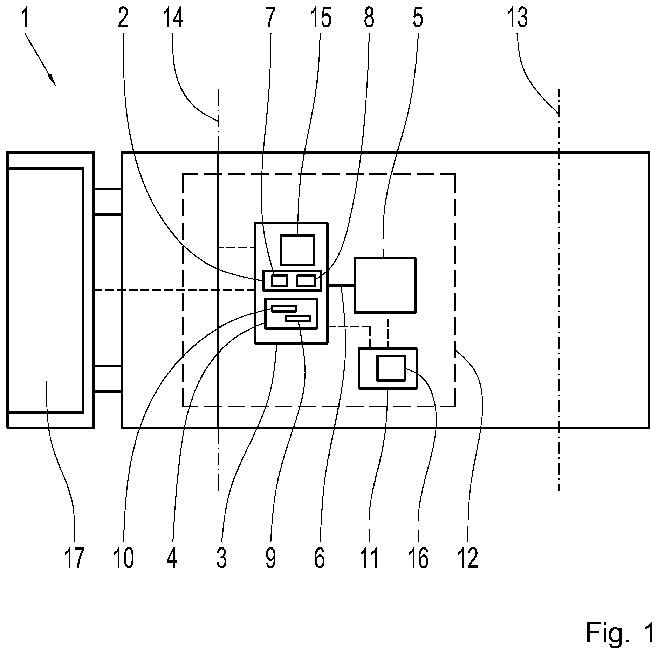

Stand der Technik ist US 10948079 B2. Dieses Dokument offenbart (die Verweise in Klammern beziehen sich auf dieses Dokument) ein Verfahren zum Betreiben einer Arbeitsmaschine (10), die Arbeitsmaschine (10) umfassend eine Antriebsvorrichtung (Fig. 1) mit einem hydrodynamischen Drehmomentwandler (46-48) sowie einem Lastschaltgetriebe (3) mit mindestens einer ersten lastschaltfähigen Reibkupplung (90-92). Eine Aufgabe der vorliegenden Erfindung kann darin gesehen werden, ein Verfahren und System zum Betrieben einer Arbeitsmaschine mit einem verbesserten Inch-Betrieb vorzuschlagen.

Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Um mit möglichst wenig, vorzugsweise ohne zusätzliche Messtechnik eine genaue Ansteuerung einer für einen Inchbetrieb einer Arbeitsmaschine zum Einsatz kommenden lastschaltfähigen Reibkupplung zu ermöglichen, wird gemäß der vorliegenden Erfindung vorgeschlagen, eine Zugkraftmodulation am Lastschaltgetriebe auszuführen, die auch Einflüsse wie Verschleißzustände, Reibwerte und Temperatur kompensieren kann. Dazu wird ein sogenannter geregelter Inchbetrieb vorgeschlagen, wobei ein Einlernen eines Wandlerschlupfes automatisch erfolgt und somit für verschiedene Getriebe für Arbeitsmaschinen geeignet ist.

Nach einem ersten Erfindungsaspekt umfasst ein erfindungsgemäßes Verfahren zum Betreiben einer Arbeitsmaschine, die eine Antriebsvorrichtung mit einem hydrodynamischen Drehmomentwandler sowie einem Lastschaltgetriebe mit mindestens einer ersten lastschaltfähigen Reibkupplung, die Schritte:
- Ermitteln mindestens eines ersten Wandlerschlupfes, während
   - sich die Antriebsvorrichtung im Leerlauf befindet, wobei eine von einer Antriebsmaschine drehantreibbare Getriebeeingangswelle mit einer konstanten Leerlaufdrehzahl rotiert,
   - sich die zumindest erste Reibkupplung in einem ersten Schaltzustand befindet, in dem über die zumindest erste Reibkupplung kein Drehmoment übertragen wird,
   - eine mit der Getriebeeingangswelle wirkverbundene Turbine des Drehmomentwandlers eine geringere Drehzahl aufweist als eine Pumpe des Drehmomentwandlers;
- Ausführen eines Inch-Regelbetriebs, wobei die zumindest erste Reibkupplung zur Einstellung des ermittelten ersten Wandlerschlupfes derart betätigt wird, dass Reibpartner eines jeweiligen Reibpaares der zumindest ersten Reibkupplung in Reibkontakt miteinander gebracht werden.

Das Verfahren besteht folglich aus im Wesentlichen zwei Schritten, zum einen dem Einlernen eines ersten Wandlerschlupfes und zum anderen dem geregelten Inchbetrieb. Als Wandlerschlupf wird die Differenz aus Motor- bzw. Pumpenraddrehzahl und Turbinenraddrehzahl bei gleichzeitiger Motorleerlaufdrehzahl verstanden. Die Antriebsvorrichtung befindet sich im Leerlauf, wenn keine Antriebsleistung über das Lastschaltgetriebe auf mit dem Getriebe wirkverbundene Räder der Arbeitsmaschine zum Antrieb derselben übertragen wird.

Die zumindest erste Reibkupplung ist als Richtungskupplung bzw. Inch-Kupplung zu verstehen und befindet sich während des Einlernens des ersten Wandlerschlupfes im geöffneten Schaltzustand, und zwar in jedem Fall so, dass kein Drehmoment über diese Reibkupplung übertragen wird. Das Einlernen des Wandlerschlupfes kann demnach bei komplett geöffneter erster Reibkupplung oder bei sozusagen "vorbereiteter" Reibkupplung erfolgen. Eine komplett geöffnete erste Reibkupplung ist als unbetätigte Reibkupplung zu verstehen, die einen Ist-Druck von 0 bar bzw. einen Ansteuerstrom von 0 mA aufweist. Eine vorbereitete Reibkupplung kann bereits mit einem bestimmten Druck bzw. einem gewissen Ansteuerstrom betätigt sein, ohne jedoch ein Drehmoment zu übertragen. Im Fall einer als Lamellenkupplung ausgebildeten Reibkupplung können demnach Reiblamellen kurz vor Kontaktierung oder bereits in Kontaktierung sein, jedoch kein Drehmoment übertragen. Vorzugsweise erfolgt das Einlernen des Wandlerschlupfes bei vollständig geöffneter bzw. unbetätigter Reibkupplung.

Eine Reibkupplung im Sinne der Erfindung ist dazu eingerichtet, ein Drehmoment lösbar zwischen zwei Bauteilen zu übertragen. Eine Reibkupplung ist regelbar und kann je nach Anpresskraft ein Drehmoment zwischen 0% und 100% übertragen. Die Drehmomentübertragung wird über zwei Reibpartner erreicht, die ein Reibpaar der Reibkupplung bilden, wobei die Reibpartner, wenn sie durch entsprechende Betätigung und/oder Verlagerung aneinandergedrückt werden, einen Reib- bzw. Kraftschluss zur Drehmomentübertragung erzeugen.

Der Inch-Regelbetrieb im Sinne der Erfindung liegt vor, wenn ein Inch-Pedal der Arbeitsmaschine zu 100% betätigt ist. Ein 100% betätigtes Inch-Pedal überträgt kein bzw. kein nennenswertes Drehmoment auf den Abtrieb. Im Inch-Regelbetrieb wird die zumindest erste Reibkupplung derart betätigt, dass mittels eines bestimmten Stelldrucks der ermittelte bzw. eingelernte erste Wandlerschlupf eingestellt wird, wobei Reibpartner eines jeweiligen Reibpaares der zumindest ersten Reibkupplung in Reibkontakt miteinander gebracht werden. Dies ist als sogenannter "Touchpoint" der Reibkupplung zu verstehen. In diesem Punkt kann der Inch-Regelbetrieb erfolgen.

Die erste Reibkupplung ist bevorzugt als Lamellenkupplung ausgebildet, wobei der jeweilige Reibpartner eine Lamelle der Lamellenkupplung ist. Zwei Lamellen bilden somit ein jeweiliges Reibpaar, wobei durch axiales Anpressen der Lamellen der Kraftschluss erzeugt wird. Die Reibkupplung kann mehrere Reibpaare aufweisen, die in bekannter Weise zu einem Reibpaket zusammengefasst werden können. Infolge der Anpresskraft ergibt sich bei Betätigung der Reibkupplung also eine Reibkraft über die Reibfläche, welche multipliziert mit dem mittleren Radius der Reibfläche ein übertragbares Drehmoment ergibt. Ein Betätigen der Reibkupplung erfolgt mittels der im Stand der Technik bekannten Mittel.

Wird ausgehend vom Touchpoint der Stelldruck an der ersten Reibkupplung nur minimal angehoben, reduziert sich die Drehzahl des Turbinenrades des Drehmomentwandlers. Dies hat den Grund, dass jede Erhöhung des Druck ausgehend des Touchpoint-Drucks zu einem übertragenen Drehmoment führt. Ist der Wandlerschlupf am Touchpoint bekannt, so kann daraus abgeleitet werden, wann abhängig der Änderung des Wandlerschlupfes die erste Reibkupplung ein Drehmoment überträgt. Der Touchpoint der ersten Reibkupplung kann theoretisch aus konstruktiven Daten der jeweiligen Reibkupplung bestimmt werden.

Der Touchpoint-Druck wird vorzugsweise eingestellt, indem ein bestimmter Ansteuerstrom zur Betätigung der Reibkupplung eingestellt wird. Anhand des Ansteuerstroms wird ein Stelldruck erzeugt, der die Reibpartner in Kontakt miteinander bringt, ohne dass über die Reibkupplung ein Drehmoment übertragen wird. In diesem Sinn wird die zumindest erste Reibkupplung zur Ausführung des Inch-Regelbetriebs durch Einstellung eines Soll-Ansteuerstroms betätigt. Durch gezielte Regelung des Ansteuerstroms stellt sich an der ersten Reibkupplung ein bestimmter Ist-Druck ein. Abhängig des Wandlerschlupfes kann somit ohne Messtechnik als Indikator Wandlerschlupf der Ist-Druck der jeweiligen Reibkupplung bestimmt werden.

Im Inch-Regelbetrieb wird der Ansteuerstrom der ersten Reibkupplung so geregelt, dass sich der zuvor im Leerlauf ermittelte Wandlerschlupf einstellt. Dabei wirkt der aus dem Solldruck bestimmte Ansteuerstrom als Vorsteuerung.

Durch den Inch-Regelbetrieb wird ein "Leerlaufen" der zumindest ersten Reibkupplung verhindert. Die zumindest erste Reibkupplung ist demnach sofort bereit zum geregelten Inchbetrieb, wenn der Fahrer das Inch-Stellmittel, insbesondere das Inch-Pedal, entsprechend betätigt.

In einer Ausführungsform wird anhand des jeweiligen ermittelten Wandlerschlupfes ein Offset bestimmt, wobei die zumindest erste Reibkupplung ferner unter Berücksichtigung des jeweiligen Offsets zur Einstellung des ermittelten ersten Wandlerschlupfes derart betätigt wird, dass die Reibpartner des jeweiligen Reibpaares der zumindest ersten Reibkupplung in Reibkontakt miteinander gebracht werden. Der Ansteuerstrom zur Betätigung der ersten Reibkupplung wird somit durch einen zusätzlichen Ansteuerstrom ergänzt, der sich aus dem Offset ergibt. Der Offset kann vorab messtechnisch ermittelt worden sein.

Der Offset ist eine Drehzahlabweichung vom Wandlerschlupf, die auf den ermittelten Wandlerschlupf addiert wird, wobei unter Berücksichtigung des ermittelten Wandlerschlupfes und des Offsets eine Betätigung der ersten Reibkupplung erfolgt, und zwar bevorzugt so, dass ein minimales Drehmoment über die erste Reibkupplung übertragen wird. Indem die erste Reibkupplung also auch in Abhängigkeit des Offsets betätigt wird, wird am Touchpoint der ersten Reibkupplung im Inch-Regelbetrieb ein sehr geringes Drehmoment durch die erste Reibkupplung übertragen. Mithin wird ein übertragenes Drehmoment insbesondere durch entsprechende Wahl des Offsets eingestellt.

Im Inch-Regelbetrieb wird der Ansteuerstrom der ersten Reibkupplung demnach so geregelt, dass sich der zuvor im Leerlauf ermittelte Wandlerschlupf inklusive des vorgegebenen Offsets einstellt. Der zusätzlich eingestellte Offset bewirkt, dass der Ist-Druck an der ersten Reibkupplung etwas erhöht ist, so dass die erste Reibkupplung minimal Drehmoment überträgt. Der Steuerdruck ist gegenüber dem Ist-Druck ohne Berücksichtigung des Offsets ebenfalls etwas erhöht. Durch den vorgegebenen Offset kann ein Inch-Betrieb direkt eingeleitet werden, sobald der Fahrer das Inch-Pedal entsprechend betätigt.

Vorzugsweise wird der zumindest erste Wandlerschlupf in Abhängigkeit mindestens einer Störgröße des Lastschaltgetriebes und/oder des Drehmomentwandlers ermittelt. Störgrößen können unter anderem das Setzverhalten der Kupplungsbeläge, der Zustand der Kupplungsbeläge der jeweiligen als Reibkupplung ausgebildeten Lastschaltkupplung, der Zustand von Schmier- und/oder Kühlmittel, der Reibwert des jeweiligen Reibpaares der jeweiligen als Reibkupplung ausgebildeten Lastschaltkupplung und/oder eine Schmiermitteltemperatur sein. Der Wandlerschlupf ist insbesondere stark temperaturabhängig, sodass der Wandlerschlupf jeweils bei unterschiedlichen Temperaturen ermittelt bzw. eingelernt wird. Mit anderen Worten kann in Abhängigkeit der jeweiligen Störgröße im Leerlauf ein jeweiliger Wandlerschlupf ermittelt bzw. automatisch eingelernt werden.

Bevorzugt wird nach Erreichen des Soll-Ansteuerstroms ein Stromoffset bestimmt. Anders gesagt bestimmt der Regler nach Erreichen des Soll-Ansteuerstroms einen Stromoffset, so dass sich der gewünschte Wandlerschlupf einstellt. Ein Stromoffset ist eine Abweichung der Stromstärke vom Soll-Ansteuerstrom, der erforderlich ist, um den gewünschten Wandlerschlupf einzustellen.

Ferner bevorzugt wird der jeweilige bestimmte Stromoffset abgespeichert. Damit können die Stromoffset-Werte auch außerhalb des Inch-Regelbetriebs und/oder nach einem Neustart der Arbeitsmaschine zu verwenden. Mithin kann der jeweilige gespeicherte Stromoffset für verschiedene Inch-Betriebszustände genutzt werden. Außerhalb des Regelbetriebs ist der Offset fixiert. Außerhalb des Regelbetriebs wird zwar ein Offset ausgegeben, jedoch wird dieser nicht berücksichtigt.

In einem erfindungsgemäßen System zum Betreiben einer Antriebsmaschine, die eine Antriebsvorrichtung mit einem hydrodynamischen Drehmomentwandler sowie einem Lastschaltgetriebe mit mindestens einer ersten lastschaltfähigen Reibkupplung umfasst, ist nach einem zweiten Erfindungsaspekt mindestens ein erster Wandlerschlupf ermittelbar, während
- sich die Antriebsvorrichtung im Leerlauf befindet, wobei eine von einer Antriebsmaschine drehantreibbare Getriebeeingangswelle mit einer konstanten Leerlaufdrehzahl rotiert,
- sich die Reibkupplung in einem ersten Schaltzustand befindet, in dem über die zumindest erste Reibkupplung kein Drehmoment übertragen wird,
- eine mit der Getriebeeingangswelle wirkverbundene Turbine des Drehmomentwandlers eine geringere Drehzahl aufweist als eine Pumpe des Drehmomentwandlers;
und wobei ein Inch-Regelbetrieb ausführbar ist, wobei die zumindest erste Reibkupplung zur Einstellung des ermittelten ersten Wandlerschlupfes derart betätigbar ist, dass Reibpartner eines jeweiligen Reibpaares der zumindest ersten Reibkupplung in Reibkontakt miteinander gebracht werden.

Vorzugsweise ist anhand des jeweiligen ermittelten Wandlerschlupfes ein Offset bestimmbar, wobei die zumindest erste Reibkupplung ferner unter Berücksichtigung des jeweiligen Offsets zur Einstellung des ermittelten ersten Wandlerschlupfes derart betätigbar ist, dass die Reibpartner des jeweiligen Reibpaares der zumindest ersten Reibkupplung in Reibkontakt miteinander gebracht werden.

Bevorzugt ist der zumindest erste Wandlerschlupf in Abhängigkeit mindestens einer Störgröße des Lastschaltgetriebes und/oder des Drehmomentwandlers ermittelbar.

Ferner bevorzugt ist die zumindest erste Reibkupplung zur Ausführung des Inch-Regelbetriebs durch Einstellung eines Soll-Ansteuerstroms betätigbar.

Außerdem bevorzugt ist nach Erreichen des Soll-Ansteuerstroms ein Stromoffset bestimmbar. Des Weiteren bevorzugt weist das System einen Datenspeicher auf, der ausgebildet ist, zumindest den bestimmten Stromoffset abzuspeichern.

Es sei ausdrücklich darauf hingewiesen, dass das Lastschaltgetriebe mehrere lastschaltfähige Reibkupplungen bzw. Richtungskupplungen im Sinn dieser Erfindung aufweisen kann, die einen jeweiligen Inch-Regelbetrieb ausführen können. Das Lastschaltgetriebe ist als lastschaltbares Stufengetriebe zu verstehen.

Gemäß einem dritten Aspekt der Erfindung wird eine Prozessoreinheit vorgeschlagen, wobei die Prozessoreinheit dazu eingerichtet ist, das erfindungsgemäße Verfahren nach dem ersten Erfindungsaspekt auszuführen.

Gemäß einem vierten Aspekt der Erfindung wird ein Antriebsstrang für eine Arbeitsmaschine bereitgestellt. Der Antriebsstrang umfasst eine Prozessoreinheit nach dem dritten Erfindungsaspekt sowie eine Antriebsvorrichtung mit einem damit wirkverbundenen Lastschaltgetriebe und einen ebenfalls damit wirkverbundenen hydrodynamischen Drehmomentwandler. Die Antriebsvorrichtung ist ein Antriebsmotor, vorzugsweise ein Verbrennungsmotor, insbesondere ein Dieselmotor, der über das Lastschaltgetriebe mit zumindest einem Rad einer antreibbaren Achse wirkverbunden ist.

Gemäß einem fünften Aspekt der Erfindung wird eine Arbeitsmaschine bereitgestellt, welches eine Antriebsvorrichtung nach dem vierten Aspekt der Erfindung umfasst. Eine Arbeitsmaschine weist typischerweise zumindest ein Anbaugerät auf, das mittels des erfindungsgemäßen Systems betreibbar ist. Bei der Arbeitsmaschine handelt es sich z.B. um eine Landmaschine, wie einen Traktor mit Schaufel oder Gabel, oder um eine Baumaschine, wie einen mobilen Bagger mit Schaufel, oder einem Gabelstapler mit einer Gabel. Auch weitere Kraftfahrzeuge mit Anbaugeräten, die einen Inch-Betrieb vorteilhaft einsetzen können, sind denkbar.

Gemäß einem sechsten Aspekt der Erfindung wird ein Computerprogrammprodukt bereitgestellt, enthaltend maschinenlesbare Anweisungen, die, wenn sie auf einem Computer und/oder auf einer Prozessoreinheit ausgeführt werden, den Computer und/oder die Prozessoreinheit zu einer Bedienungslogik des Systems zum Betreiben einer Arbeitsmaschine gemäß dem zweiten Erfindungsaspekt aufwerten, und/oder dazu veranlassen, ein Verfahren zum Betreiben einer Arbeitsmaschine gemäß dem ersten Erfindungsaspekt auszuführen.

Die obigen Definitionen sowie Ausführungen zu technischen Effekten, Vorteilen und vorteilhaften Ausführungsformen des erfindungsgemäßen Verfahrens gemäß dem ersten Erfindungsaspekt gelten sinngemäß ebenfalls für das erfindungsgemäße System gemäß dem zweiten Erfindungsaspekt, für die erfindungsgemäße Prozessoreinheit gemäß dem dritten Erfindungsaspekt, für den erfindungsgemäßen Antriebsstrang gemäß dem vierten Erfindungsaspekt, für die erfindungsgemäße Arbeitsmaschine gemäß dem fünften Erfindungsaspekt sowie für das erfindungsgemäße Computerprogrammprodukt gemäß dem sechsten Erfindungsaspekt, und umgekehrt.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine grob schematische Darstellung einer Arbeitsmaschine, und
- Fig. 2: ein Diagramm zur schematischen Veranschaulichung eines Ablaufes des erfindungsgemäßen Verfahrens zum Betreiben der Arbeitsmaschine nach Fig. 1.

Fig. 1 zeigt ein Kraftfahrzeug in der Form einer Arbeitsmaschine 1. Bei der Arbeitsmaschine 1 kann es sich z.B. um einen Radlader mit Schaufel als Anbaugerät 17 handeln. Die Arbeitsmaschine 1 kann in einem Inch-Betrieb betrieben werden. Die Arbeitsmaschine 1 umfasst einen Antriebsstrang 12, wobei der Antriebsstrang 12 eine Prozessoreinheit 11 sowie eine Antriebsvorrichtung 5 zum Antrieb der Arbeitsmaschine 1 umfasst. Bei der Antriebsvorrichtung 5 handelt es sich z.B. um einen Verbrennungskraftmotor in Form eines Dieselmotors, der mit einem Lastschaltgetriebe 3 bzw. einem lastschaltbaren Stufengetriebe und einem hydrodynamischen Drehmomentwandler 2 wirkverbunden ist. Der genaue Aufbau des Lastschaltgetriebes 3 ist hier nicht gezeigt. Jedenfalls umfasst das Lastschaltgetriebe 3 mehrere Kupplungen, wovon zumindest eine erste Kupplung eine lastschaltfähige Reibkupplung 4 ist. Diese Reibkupplung 4 ist als Richtungskupplung des Lastschaltgetriebes 3 zu verstehen. Mit der Reibkupplung 4 ist ein erfindungsgemäßes Verfahren zum Betreiben der Antriebsmaschine 1 ausführbar, was nachfolgend erläutert wird.

Die Antriebsvorrichtung 5 treibt über das Lastschaltgetriebe 3 eine Vorderachse 14 und je nach Inch-Zustand auch das Anbaugerät 17 an. Denkbar ist, dass die Antriebsvorrichtung alternativ oder ergänzend auch die Hinterachse 13 der Arbeitsmaschine 1 antreibt. An der Vorderachse 14 und an der Hinterachse 13 können Räder, Ketten oder Ähnliches zum Vortrieb der Arbeitsmaschine 1 angebracht sind. Das Lastschaltgetriebe 3 kommuniziert mit einer Prozessoreinheit 11 und umfasst ferner einen hydrodynamischen Drehmomentwandler 2. Der Drehmomentwandler 2 umfasst ein Pumpenrad 7 und ein Turbinenrad 8, die mit einer Getriebeeingangswelle 6 der Antriebsvorrichtung 5 wirkverbunden oder wirkverbindbar sind. Der Drehmomentwandler 2 ist Teil eines erfindungsgemäßen Systems zum Betreiben einer Antriebsmaschine 1, wobei die Reibkupplung 4 in einem Inch-Regelbetrieb derart betätigbar ist, dass ein "Leerlaufen" der Reibkupplung 4 verhindert wird und im Umkehrschluss die Reibkupplung 4 zur Ausführung eines Inch-Betriebs der Arbeitsmaschine 1 sofort einsetzbar ist.

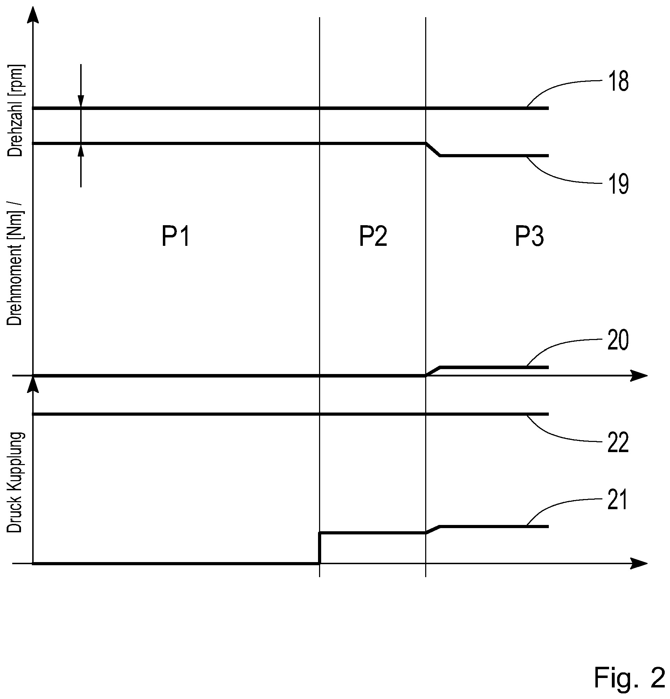

Fig. 2 zeigt ein Diagramm, wobei oben jeweils ein erster Drehzahlverlauf 18 des Pumpenrades 7 bzw. der Getriebeeingangswelle 6 und ein zweiter Drehzahlverlauf 19 des Turbinenrades 8 über die Zeit aufgetragen ist. In der Mitte des Diagramms nach Fig. 2 ist ein Drehmomentverlauf 20 eines übertragenen Drehmoments der Reibkupplung 4 über die Zeit aufgetragen. Unten im Diagramm ist ein erster Druckverlauf 21 der Reibkupplung 4 sowie ein zweiter Druckverlauf 22 einer zweiten Reibkupplung 15, die das Lastschaltgetriebe 3 mit einem Abtrieb bzw. mit Rädern des Antriebsstranges 12 verbindet, aufgetragen. Der zweite Druckverlauf 22 zeigt, dass während des Leerlaufbetriebs (Phasen P1 und P2) und während des Inch-Regelbetriebs (Phase P3) die zweite Reibkupplung 15 geschlossen ist. Ebenso ist zu erkennen, dass sich die Drehzahl des Pumpenrades 7 bzw. der Getriebeeingangswelle 6 in den Phasen P1 bis P3 nicht verändert.

Gemäß Fig. 2 erfolgt in einer ersten Phase P1 des erfindungsgemäßen Verfahrens ein Ermitteln bzw. automatisches Einlernen eines Wandlerschlupfes. Dies erfolgt, während sich die Antriebsvorrichtung 5 im Leerlauf befindet, wobei die von einer Antriebsmaschine 1 drehangetriebene Getriebeeingangswelle 6 mit einer konstanten Leerlaufdrehzahl gemäß dem ersten Drehzahlverlauf 18 rotiert, während sich die Reibkupplung 4 in einem komplett geöffneten ersten Schaltzustand befindet, so dass über die Reibkupplung 4 kein Drehmoment übertragen wird, vgl. erster Druckverlauf 21 in Phase P1. Zudem weist im Leerlauf der Antriebsvorrichtung 5 das mit der Getriebeeingangswelle 6 wirkverbundene Turbinenrad 8 des Drehmomentwandlers 2 eine geringere Drehzahl auf als das Pumpenrad 7 des Drehmomentwandlers 2. Der Wandlerschlupf wird beeinflusst durch verschiedene Störgrößen des Antriebsstranges 12, insbesondere des Lastschaltgetriebes 3, wobei der Wandlerschlupf des Drehmomentwandlers 2 anhand dieser Störgrößen ermittelt wird. Da der Wandlerschlupf insbesondere stark temperaturabhängig ist, kann der Wandlerschlupf bei unterschiedlichen Temperaturen ermittelt bzw. eingelernt werden. Beispielsweise und zum besseren Verständnis wird hier bei einer Schmiermitteltemperatur von 70°C ein Wandlerschlupf im Leerlaufbetrieb der Antriebsvorrichtung 5 von 30 Umdrehungen pro Minute ermittelt. In der ersten Phase P1 wird der Wandlerschlupf als Referenzwert automatisch eingelernt.

Anschließend kann im Leerlaufbetrieb der Antriebsvorrichtung 5 ein Inch-Regelbetrieb ausgeführt werden, bei dem die Reibkupplung 4 zur Einstellung des ermittelten ersten Wandlerschlupfes zunächst derart betätigt wird, dass Reibpartner 9, 10 eines jeweiligen Reibpaares der Reibkupplung 4 in Reibkontakt miteinander gebracht werden. Dies entspricht der Phase P2 und ist als "Touchpoint" der Reibkupplung 4 zu verstehen. Dabei wird der Druck gemäß dem Druckverlauf 21 nach Fig. 2 auf einen bestimmten Wert erhöht. Im Touchpoint lässt jede Vergrößerung des Wandlerschlupfes ein übertragbares Drehmoment mittels der Reibkupplung 4 detektieren. Außerdem führte jede Erhöhung eines Drucks in der Reibkupplung 4 zu einem übertragenen Drehmoment, während die Drehzahl des Turbinenrades 8 absinkt. Dies wird im Übergangsbereich zwischen Phase P2 und Phase P3 deutlich.

Der Wandlerschlupf entspricht einem Zustand der Reibkupplung 4, in dem 0 Nm Drehmoment übertragen wird. Bei der Reibkupplung 4 handelt es sich vorliegend um eine Lamellenkupplung, wobei die Reibpartner 9, 10 gemäß Fig. 1 als Lamellen der Lamellenkupplung zu verstehen sind. Wann immer nachfolgend von Lamellen gesprochen werden, so sind darunter die Reibpartner 9, 10 zu verstehen, und umgekehrt. Ebenso ist, wenn immer nachfolgend von einer Lamellenkupplung gesprochen wird, die Reibkupplung 4 gemeint, und umgekehrt. Es sei angemerkt, dass für die Erfindung alle Arten von reibfähigen Kupplungen eingesetzt werden können, unabhängig ob sie pneumatisch, hydraulisch oder anders angesteuert werden.

Der Inch-Regelbetrieb liegt vor, wenn - ein hier nicht gezeigtes - Inch-Stellmittel, beispielsweise ein Inch-Pedal, voll betätigt ist, also kein oder kein nennenswertes Drehmoment zum Anbaugerät der Arbeitsmaschine 1 überträgt. Der Inch-Regelbetrieb erfolgt in der dritten Phase P3.

Im Inch-Regelbetrieb wird ein Soll-Ansteuerstrom der Reibkupplung 4 so eingestellt, dass sich der zuvor im Leerlauf ermittelte Wandlerschlupf inklusive eines empirisch ermittelten und vorgegebenen Offsets einstellt. Mithin wird der Schlupf im Drehmomentwandler 2 auf einen Sollwert eingeregelt. Sobald der Wandlerschlupf erreicht ist, lassen sich aus physikalischen Zusammenhängen der Ist-Druck in der Reibkupplung 4 ermitteln, mit dem die Reibkupplung 4 betätigt wird. Der Offset beträgt beispielsweise 5 Umdrehungen pro Minute, sodass ein 35 Umdrehungen pro Minute entsprechender Ansteuerstrom zur Betätigung der Reibkupplung 4 eingestellt wird. Der aus dem Solldruck bestimmte Ansteuerstrom dient als Vorsteuerung. Der zusätzlich eingestellte Offset bewirkt, dass der Ist-Druck der der Reibkupplung 4 etwas erhöht ist, weshalb die Reibkupplung 4 minimal Drehmoment überträgt. Der Steuerdruck ist gegenüber dem "0 Nm-Druck" ebenfalls etwas erhöht. In diesem Beispiel beträgt der Steuerdruck zum Einstellen des ersten Wandlerschlupfes bzw. zur Betätigung der Reibkupplung 4 1,5 bar, so dass die Reibpartner 9, 10 aneinander anliegen, aber kein Drehmoment übertragen. Dieser Druck entspricht im Wesentlichen der Federkraft in der Reibkupplung 4.

Unter Berücksichtigung des Offsets wird die Reibkupplung 4 im Inch-Regelbetrieb auf einen Soll-Druck von beispielsweise 1,6 bar gesteuert. Der Ansteuerstrom beträgt dafür entsprechend 220 mA. Der Regler bestimmt nach Erreichen des Soll-Ansteuerstroms einen Stromoffset, so dass sich der gewünschte Wandlerschlupf einstellt. Dieser kann für verschiedene Inch-Betriebszustände auf einer Speichereinheit 16 abgespeichert werden. Mit anderen Worten kann der aktuell verwendete Strom am proportionalen Druckregler als Wert abgespeichert werden, wobei durch Bildung eines Stromoffsets der Grundparameter für verschiedene Inch-Betriebszustände verwendet werden. Auf der Speichereinheit 16 können in Abhängigkeit der zuvor genannten Störgrößen Wandlerschlupfdrehzahlen abgespeichert und für von dem Regelbetrieb verschiedene Betriebszustände verwendet werden.

Der Inch-Regelbetrieb kann mittels eines Computerprogrammprodukts zum Betreiben der Arbeitsmaschine 1 erfolgen, wobei das Computerprogrammprodukt dazu entsprechenden Programmcode enthalten kann. Beispielsweise kann ein Regler zur Regelung des Ansteuerstroms auf dem Computerprogrammprodukt hinterlegt sein. Die Prozessoreinheit 11 kann auf das Computerprogrammprodukt zugreifen und es ausführen. Beispielsweise kann das Computerprogrammprodukt auf einer Speichereinheit 16 der Prozessoreinheit 11 gespeichert sein.

Unterschiedliche Drehmomentwandler haben naturgemäß unterschiedliche Kennungen und Wandlerschlupfdrehzahlen. Mit der hier vorgeschlagenen Erfindung kann eine automatische Erkennungs-Funktion für den Wandlerschlupf realisiert werden. Mit dem Einlernen der Wandlerschlupfdrehzahl kann für jedes beliebige Getriebe die Wandlercharakteristik eingelemt und egalisiert werden. Ebenso können Toleranzen wie Reiberwerte, aber auch Alterungseinflüsse von Reibflächen und des Schmiermittels kompensiert werden.

### Bezugszeichen

- 1: Arbeitsmaschine
- 2: Hydrodynamischer Drehmomentwandler
- 3: Lastschaltgetriebe
- 4: Erste Reibkupplung bzw. Lamellenkupplung
- 5: Antriebsvorrichtung
- 6: Getriebeeingangswelle
- 7: Pumpenrad
- 8: Turbinenrad
- 9: Erster Reibpartner bzw. erste Lamelle der Reibkupplung
- 10: Zweiter Reibpartner bzw. zweite Lamelle der Reibkupplung
- 11: Prozessoreinheit
- 12: Antriebsstrang
- 13: Hinterachse
- 14: Vorderachse
- 15: Zweite Reibkupplung
- 16: Speichereinheit
- 17: Anbaugerät
- 18: Erster Drehzahlverlauf
- 19: Zweiter Drehzahlverlauf
- 20: Drehmomentverlauf
- 21: Erster Druckverlauf
- 22: Zweiter Druckverlauf
- P1: Erste Phase
- P2: Zweite Phase
- P3: Dritte Phase

## Patentansprüche

1. Verfahren zum Betreiben einer Arbeitsmaschine (1), die Arbeitsmaschine (1) umfassend eine Antriebsvorrichtung (5) mit einem hydrodynamischen Drehmomentwandler (2) sowie einem Lastschaltgetriebe (3) mit mindestens einer ersten lastschaltfähigen Reibkupplung (4), das Verfahren umfassend die Schritte:
- Ermitteln mindestens eines ersten Wandlerschlupfes, während
• sich die Antriebsvorrichtung (5) im Leerlauf befindet, wobei eine von einer Antriebsmaschine (1) drehantreibbare Getriebeeingangswelle (6) mit einer konstanten Leerlaufdrehzahl rotiert,
• sich die zumindest erste Reibkupplung (4) in einem ersten Schaltzustand befindet, in dem über die zumindest erste Reibkupplung (4) kein Drehmoment übertragen wird,
• ein mit der Getriebeeingangswelle (6) wirkverbundenes Turbinenrad (8) des Drehmomentwandlers (2) eine geringere Drehzahl aufweist als ein Pumpenrad (7) des Drehmomentwandlers (2);
- und **gekennzeichnet durch** das Ausführen eines Inch-Regelbetriebs, wobei die zumindest erste Reibkupplung (4) zur Einstellung des ermittelten ersten Wandlerschlupfes derart betätigt wird, dass Reibpartner (9, 10) eines jeweiligen Reibpaares der zumindest ersten Reibkupplung (4) in Reibkontakt miteinander gebracht werden.

2. Verfahren nach Anspruch 1, wobei anhand des jeweiligen ermittelten Wandlerschlupfes ein Offset bestimmt wird, wobei die zumindest erste Reibkupplung (4) ferner unter Berücksichtigung des jeweiligen Offsets zur Einstellung des ermittelten ersten Wandlerschlupfes derart betätigt wird, dass die Reibpartner (9, 10) des jeweiligen Reibpaares der zumindest ersten Reibkupplung (4) in Reibkontakt miteinander gebracht werden.

3. Verfahren nach Anspruch 1 oder Anspruch 2, wobei der zumindest erste Wandlerschlupf in Abhängigkeit mindestens einer Störgröße des Lastschaltgetriebes (3) und/oder des Drehmomentwandlers (2) ermittelt wird.

4. Verfahren nach einem der vorhergehenden Ansprüche, wobei die zumindest erste Reibkupplung (4) zur Ausführung des Inch-Regelbetriebs durch Einstellung eines Soll-Ansteuerstroms betätigt wird.

5. Verfahren nach Anspruch 4, wobei nach Erreichen des Soll-Ansteuerstroms ein Stromoffset bestimmt wird.

6. Verfahren nach Anspruch 5, wobei der bestimmte Stromoffset abgespeichert wird.

7. System zum Betreiben einer Antriebsmaschine (1), die Arbeitsmaschine (1) umfassend eine Antriebsvorrichtung (5) mit einem hydrodynamischen Drehmomentwandler (2) sowie einem Lastschaltgetriebe (3) mit mindestens einer ersten lastschaltfähigen Reibkupplung (4), wobei mindestens ein erster Wandlerschlupf ermittelbar ist, während
• sich die Antriebsvorrichtung (5) im Leerlauf befindet, wobei eine von einer Antriebsmaschine (1) drehantreibbare Getriebeeingangswelle (6) mit einer konstanten Leerlaufdrehzahl rotiert,
• sich die zumindest erste Reibkupplung (4) in einem ersten Schaltzustand befindet, in dem über die zumindest erste Reibkupplung (4) kein Drehmoment übertragen wird,
• ein mit der Getriebeeingangswelle (6) wirkverbundenes Turbinenrad (8) des Drehmomentwandlers (2) eine geringere Drehzahl aufweist als ein Pumpenrad (7) des Drehmomentwandlers (2);
und wobei ein Inch-Regelbetrieb ausführbar ist, wobei die zumindest erste Reibkupplung (4) zur Einstellung des ermittelten ersten Wandlerschlupfes derart betätigbar ist, dass Reibpartner (9, 10) eines jeweiligen Reibpaares der zumindest ersten Reibkupplung (4) in Reibkontakt miteinander gebracht werden.

8. System nach Anspruch 7, wobei anhand des jeweiligen ermittelten Wandlerschlupfes ein Offset bestimmbar ist, wobei die zumindest erste Reibkupplung (4) ferner unter Berücksichtigung des jeweiligen Offsets zur Einstellung des ermittelten ersten Wandlerschlupfes derart betätigbar ist, dass die Reibpartner (9, 10) des jeweiligen Reibpaares der zumindest ersten Reibkupplung (4) in Reibkontakt miteinander gebracht werden.

9. System nach Anspruch 7 oder Anspruch 8, wobei der zumindest erste Wandlerschlupf in Abhängigkeit mindestens einer Störgröße des Lastschaltgetriebes (3) und/oder des Drehmomentwandlers (2) ermittelbar ist.

10. System nach einem der vorhergehenden Ansprüche, wobei die zumindest erste Reibkupplung (4) zur Ausführung des Inch-Regelbetriebs durch Einstellung eines Soll-Ansteuerstroms betätigbar ist.

11. System nach Anspruch 10, wobei nach Erreichen des Soll-Ansteuerstroms ein Stromoffset bestimmbar ist.

12. Prozessoreinheit (11), die dazu eingerichtet ist, das Verfahren nach einem der Ansprüche 1 bis 6 auszuführen.

13. Antriebsstrang (12) für eine Arbeitsmaschine (1), umfassend eine Prozessoreinheit (11) nach Anspruch 12 sowie eine Antriebsvorrichtung (5) mit einem damit wirkverbundenen Lastschaltgetriebe (3) und einen ebenfalls damit wirkverbundenen hydrodynamischen Drehmomentwandler (2).

14. Arbeitsmaschine (1), umfassend einen Antriebsstrang (12) nach Anspruch 13.

15. Computerprogrammprodukt, enthaltend maschinenlesbare Anweisungen, die, wenn sie auf einem Computer und/oder auf einer Prozessoreinheit (11) ausgeführt werden, den Computer und/oder die Prozessoreinheit (11) zu einer Bedienungslogik des Systems zum Betreiben einer Arbeitsmaschine (1) nach einem der Ansprüche 7 bis 11 aufwerten, und/oder dazu veranlassen, ein Verfahren zum Betreiben einer Arbeitsmaschine (1) nach einem der Ansprüche 1 bis 6 auszuführen.

## Claims

1. Method for operating a work machine (1), the work machine (1) comprising a drive device (5) with a hydrodynamic torque converter (2) and with a powershift transmission (3) with at least a first friction clutch (4) with powershift capability, the method comprising the steps of:
- ascertaining at least a first converter slip while
• the drive device (5) is idling, wherein a transmission input shaft (6) able to be driven rotationally by a drive machine (1) rotates at a constant idling speed,
• the at least first friction clutch (4) is in a first switching state, in which no torque is transmitted via the at least first friction clutch (4),
• a turbine wheel (8), connected operatively to the transmission input shaft (6), of the torque converter (2) has a lower rotational speed than a pump wheel (7) of the torque converter (2);
- and **characterized by** carrying out a controlled inching operation, wherein the at least first friction clutch (4), for setting the ascertained first converter slip, is actuated in such a way that friction partners (9, 10) of a respective friction pair of the at least first friction clutch (4) are brought into frictional contact with one another.

2. Method according to Claim 1, wherein an offset is determined on the basis of the respective ascertained converter slip, wherein the at least first friction clutch (4), for setting the ascertained first converter slip, is furthermore actuated with account taken of the respective offset in such a way that the friction partners (9, 10) of the respective friction pair of the at least first friction clutch (4) are brought into frictional contact with one another.

3. Method according to Claim 1 or Claim 2, wherein the at least first converter slip is ascertained in a manner dependent on at least one disturbance variable of the powershift transmission (3) and/or of the torque converter (2).

4. Method according to one of the preceding claims, wherein the at least first friction clutch (4), for carrying out the controlled inching operation, is actuated by setting a target control current.

5. Method according to Claim 4, wherein a current offset is determined after the target control current is attained.

6. Method according to Claim 5, wherein the determined current offset is stored.

7. System for operating a drive machine (1), the work machine (1) comprising a drive device (5) with a hydrodynamic torque converter (2) and with a powershift transmission (3) with at least a first friction clutch (4) with powershift capability, wherein at least a first converter slip is ascertainable while
• the drive device (5) is idling, wherein a transmission input shaft (6) able to be driven rotationally by a drive machine (1) rotates at a constant idling speed,
• the at least first friction clutch (4) is in a first switching state, in which no torque is transmitted via the at least first friction clutch (4),
• a turbine wheel (8), connected operatively to the transmission input shaft (6), of the torque converter (2) has a lower rotational speed than a pump wheel (7) of the torque converter (2);
and wherein a controlled inching operation is able to be carried out, wherein the at least first friction clutch (4), for setting the ascertained first converter slip, is actuatable in such a way that friction partners (9, 10) of a respective friction pair of the at least first friction clutch (4) are brought into frictional contact with one another.

8. System according to Claim 7, wherein an offset is determinable on the basis of the respective ascertained converter slip, wherein the at least first friction clutch (4), for setting the ascertained first converter slip, is furthermore actuatable with account taken of the respective offset in such a way that the friction partners (9, 10) of the respective friction pair of the at least first friction clutch (4) are brought into frictional contact with one another.

9. System according to Claim 7 or Claim 8, wherein the at least first converter slip is ascertainable in a manner dependent on at least one disturbance variable of the powershift transmission (3) and/or of the torque converter (2).

10. System according to one of the preceding claims, wherein the at least first friction clutch (4), for carrying out the controlled inching operation, is actuatable by setting a target control current.

11. System according to Claim 10, wherein a current offset is determinable after the target control current is attained.

12. Processor unit (11) configured to carry out the method according to one of Claims 1 to 6.

13. Drive train (12) for a work machine (1), comprising a processor unit (11) according to Claim 12 and a drive device (5) with a powershift transmission (3) connected operatively thereto and with a hydrodynamic torque converter (2) likewise connected operatively thereto.

14. Work machine (1) comprising a drive train (12) according to Claim 13.

15. Computer program product containing machine-readable instructions which, when executed on a computer and/or on a processor unit (11), cause the computer and/or the processor unit (11) to implement the operating logic of the system for operating a work machine (1) according to one of Claims 7 to 11, and/or cause a method for operating a work machine (1) according to one of Claims 1 to 6 to be carried out.

## Revendications

1. Procédé de fonctionnement d'une machine de travail (1), la machine de travail (1) comprenant un dispositif d'entraînement (5) avec un convertisseur de couple de rotation hydrodynamique (2) et une transmission commandée en charge (3) avec au moins un premier embrayage à friction (4) à commande de charge possible, le procédé comprenant les étapes :
- détermination d'au moins un premier patinage de convertisseur pendant
• que le dispositif d'entraînement (5) est au ralenti, un arbre d'entrée de transmission (6) pouvant être entraîné en rotation par une machine d'entraînement (1), tournant à une vitesse de rotation de ralenti constante,
• que l'au moins premier embrayage à friction (4) est dans un premier état de commande, dans lequel aucun couple de rotation n'est transmis par l'au moins premier embrayage à friction (4),
• qu'une roue de turbine (8) du convertisseur de couple de rotation (2), reliée fonctionnellement à l'arbre d'entrée de transmission (6), présente une vitesse de rotation inférieure à celle d'une roue de pompe (7) du convertisseur de couple de rotation (2) ;
- et **caractérisé par** l'exécution d'un mode de régulation progressif, l'au moins premier embrayage à friction (4) destiné à régler le premier patinage de convertisseur déterminé étant actionné de telle manière que des partenaires de friction (9, 10) d'une paire de friction respective de l'au moins premier embrayage à friction (4) sont amenés en contact de friction l'un avec l'autre.

2. Procédé selon la revendication 1, un décalage étant défini à l'aide du patinage de convertisseur déterminé respectif, l'au moins premier embrayage à friction (4) étant actionné en outre en tenant compte du décalage respectif pour régler le premier patinage de convertisseur déterminé de telle manière que les partenaires de friction (9, 10) de la paire de friction respective de l'au moins un premier embrayage à friction (4) sont amenés en contact de friction l'un avec l'autre.

3. Procédé selon la revendication 1 ou la revendication 2, l'au moins premier patinage de convertisseur étant déterminé en fonction d'au moins une variable de perturbation de la transmission commandée en charge (3) et/ou du convertisseur de couple de rotation (2).

4. Procédé selon l'une des revendications précédentes, l'au moins premier embrayage à friction (4) étant actionné pour l'exécution du mode de régulation progressif en réglant un courant de pilotage de consigne.

5. Procédé selon la revendication 4, un décalage de courant étant défini après avoir atteint le courant de pilotage de consigne.

6. Procédé selon la revendication 5, le décalage de courant défini étant mémorisé.

7. Système permettant de faire fonctionner une machine d'entraînement (1), la machine de travail (1) comprenant un dispositif d'entraînement (5) avec un convertisseur de couple de rotation hydrodynamique (2) et une transmission commandée en charge (3) avec au moins un premier embrayage à friction (4) à commande de charge possible, au moins un premier patinage de convertisseur pouvant être déterminé pendant
• que le dispositif d'entraînement (5) est au ralenti, un arbre d'entrée de transmission (6) pouvant être entraîné en rotation par une machine d'entraînement (1), tournant à une vitesse de rotation de ralenti constante,
• que l'au moins premier embrayage à friction (4) est dans un premier état de commande, dans lequel aucun couple de rotation n'est transmis par l'au moins premier embrayage à friction (4),
• qu'une roue de turbine (8) du convertisseur de couple de rotation (2), reliée fonctionnellement à l'arbre d'entrée de transmission (6), présente une vitesse de rotation inférieure à celle d'une roue de pompe (7) du convertisseur de couple de rotation (2) ; et un mode de régulation progressif pouvant être exécuté, l'au moins un premier embrayage à friction (4) destiné à régler le premier patinage de convertisseur déterminé pouvant être actionné de telle manière que des partenaires de friction (9, 10) d'une paire de friction respective de l'au moins un premier embrayage à friction (4) sont amenés en contact de friction l'un avec l'autre.

8. Système selon la revendication 7, un décalage pouvant être défini à l'aide du patinage de convertisseur déterminé respectif, l'au moins premier embrayage à friction (4) pouvant en outre être actionné en outre en tenant compte du décalage respectif pour régler le premier patinage de convertisseur déterminé de telle manière que les partenaires de friction (9, 10) de la paire de friction respective de l'au moins un premier embrayage à friction (4) sont amenés en contact de friction l'un avec l'autre.

9. Système selon la revendication 7 ou la revendication 8, l'au moins premier patinage de convertisseur pouvant être déterminé en fonction d'au moins une grandeur de perturbation de la transmission commandée en charge (3) et/ou du convertisseur de couple de rotation (2).

10. Système selon l'une des revendications précédentes, l'au moins premier embrayage à friction (4) pouvant être actionné en réglant un courant de pilotage de consigne pour l'exécution du mode de régulation progressif.

11. Système selon la revendication 10, un décalage de courant pouvant être défini après avoir atteint le courant de pilotage de consigne.

12. Unité de processeur (11), qui est mise au point pour exécuter le procédé selon l'une des revendications 1 à 6.

13. Chaîne cinématique (12) pour une machine de travail (1), comprenant une unité de processeur (11) selon la revendication 12 ainsi qu'un dispositif d'entraînement (5) avec une transmission commandée en charge (3) reliée fonctionnement à celui-ci et un convertisseur de couple de rotation hydrodynamique (2) également relié fonctionnement à celui-ci.

14. Machine de travail (1) comprenant une chaîne cinématique (12) selon la revendication 13.

15. Produit-programme d'ordinateur contenant des instructions lisibles par machine qui, lorsqu'elles sont exécutées sur un ordinateur et/ou sur une unité de processeur (11), mettent à jour l'ordinateur et/ou l'unité de processeur (11) pour une logique d'utilisation du système pour faire fonctionner une machine de travail (1) selon l'une des revendications 7 à 11, et/ou les amènent à exécuter un procédé destiné à faire fonctionner une machine de travail (1) selon l'une des revendications 1 à 6.
